Europäisches Patentamt

(19) European Patent Office

Office européen des brevets

(11) Publication number : **0 240 524**
**B1**

(12) **EUROPEAN PATENT SPECIFICATION**

(45) Date of publication of patent specification :
**13.12.89**

(21) Application number : **86905814.9**

(22) Date of filing : **24.09.86**

(86) International application number :
**PCT/EP 86/00602**

(87) International publication number :
**WO/8701996 (09.04.87 Gazette 87/08)**

(51) Int. Cl.⁴ : $B\ 60\ P\ \ 1/38$

(54) **DEVICE FOR LOADING AND UNLOADING VEHICLES.**

(30) Priority : **02.10.85 IT 5387985**

(43) Date of publication of application :
**14.10.87 Bulletin 87/42**

(45) Publication of the grant of the patent :
**13.12.89 Bulletin 89/50**

(84) Designated contracting states :
**AT BE CH DE FR GB LI NL SE**

(56) References cited :
**GB--A-- 2 118 518**
**US--A-- 4 204 592**
**DUDEN, Bd. 5, Das Fremdwörtesbuch, Mannheim 1982, p.242**
**CHAMBERS, Sience and Technology Dict., Edingburgh, 1984, p. 438**
**The file contains technical information submitted after the application was filed and not included in this specification**

(73) Proprietor : **SPACE S.r.l.**
**Corso Piemonte, 1**
**I-10099 San Mauro Torinesi (IT)**

(72) Inventor : **PELLEGRINO, Luigi**
**Via S. Pio V, 30 bis**
**I-10125 Torino (IT)**

(74) Representative : **Jacobacci, Filippo et al**
**c/o JACOBACCI-CASETTA & PERANI S.n.c. Via Alfieri, 17**
**I-10121 Torino (IT)**

## Description

The present invention relates to a device for loading and unloading vehicles, of the type comprising a plurality of endless cables extending in parallel along a loading platform of a vehicle with respective conveyor passes projecting from the platform and return passes contained within the thickness of the platform, and in which the cables are driven by a transverse thrust element connected to the conveyor passes and driven by means of a chain-driven operating mechanism.

Such devices, of which one example is described and illustrated in U.S. Patent No. 4 082 196, are intended for use in lorries and their trailers in order to enable the loads to be handled independently, that is, without recourse to auxiliary apparatus such as lifting trucks and the like.

The object of the present invention is to improve such devices in order to improve their reliability, working life, and efficiency.

According to the invention, this object is achieved by virtue of the fact that the conveyor passes of the cables slide along guides of self-lubricating plastics material of high strength fixed to the loading platform of the vehicle and having longitudinal slide grooves of semi-circular section, in which the conveyor passes of the cables rest.

By virtue of this characteristic, the sliding friction of the cables along the loading platform of the vehicle in which the device is installed is reduced considerably, on the one hand facilitating the translation of the loads during the loading and unloading operations, and on the other hand extending the working life of the cables themselves.

Conveniently, these cables are constituted by stranded cables with longitudinal external facetting.

The invention will now be described in detail with reference to the appended drawings, provided purely by way of non-limiting example, in which :

Figure 1 is a partially-sectioned schematic perspective view of a vehicle having a loading and unloading device according to the invention,

Figure 2 is a cross-sectional view on an enlarged scale taken on the line II-II of Figure 1, and

Figure 3 illustrates the detail indicated III in Figure 2 on an enlarged scale.

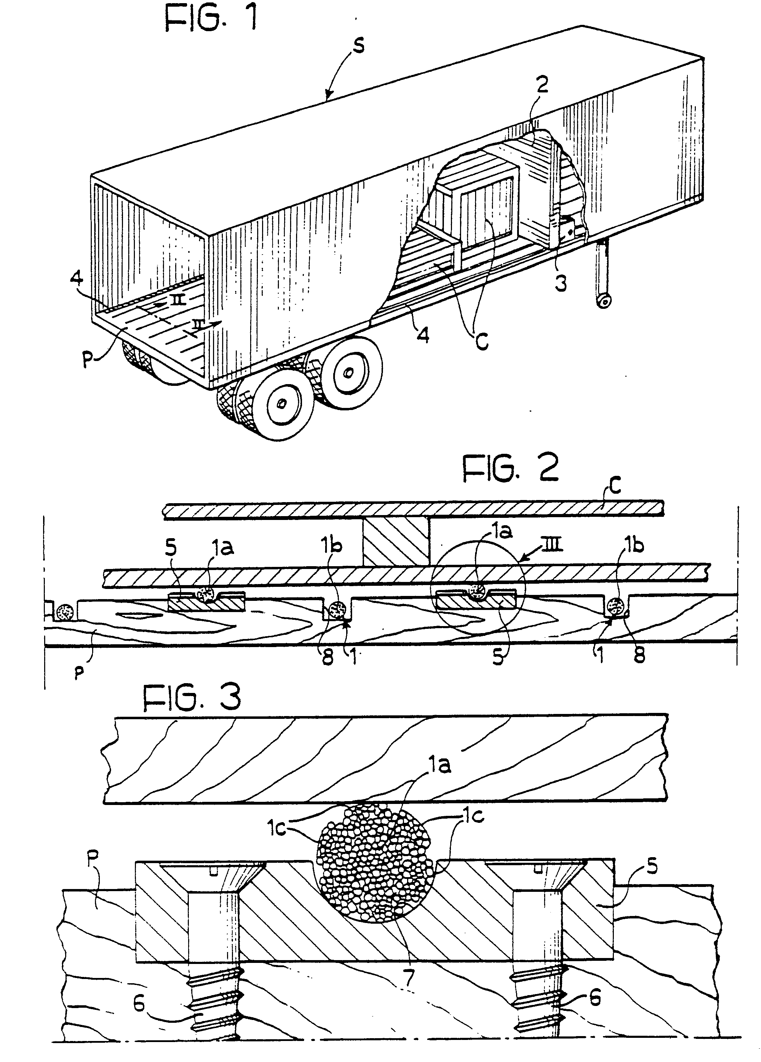

In Figure 1 a semi-trailer having a horizontal loading platform P on which loads C rest is indicated S.

The semi-trailer S has a loading and unloading device for the loads C, which includes a series of endless cables 1 extending parallel to the longitudinal axis of the semi-trailer S along the loading platform P, and a transverse thrust structure 2 for moving the cables 1. The transverse member 2 has, in known manner, drive devices 3 on its sides, which cooperate with two lateral chains 4 extending along the sides of the series of cables 1.

According to the invention, the conveyor passes 1a of the cables 1 slide along respective guides 5 fixed to the platform P parallel to its longitudinal axis. The guides 5 are of self-lubricating, high-strength plastics material, such as oil-charged nylon, and are fixed to the platform P, for example by simple self-tapping screws 6, in the manner illust rated in Figure 3.

Each guide 5 has a longitudinal slide groove 7 of semi-circular section in which the conveyor pass 1a of the respective cable 1 rests, while the return pass 1b is housed in a longitudinal channel 8 formed in the platform P. As clearly shown in Figure 2, the return passes 1b are housed within the thickness of the loading platform P and thus do not project therefrom : this is achieved by the use of return pulleys (not illustrated) with inclined axes at the ends of the cables 1.

The cables 1 are constituted, according to the invention, by stranded cables with longitudinal external facetting. This characteristic makes the cables 1 particularly compact and strong.

In operation, the movement of the loads C resting on the loading platform P is achieved by the actuation of the drive units 3 which cause the translation of the transverse member 2 as well as of the conveyor passes la of the cables 1 connected to this transverse member 2 and on which the loads C rest. The use of the guides 5 with their longitudinal grooves 7, together with the particular conformation of the cables 1 described above, enables the sliding friction of these cables 1 to be reduced considerably, thus ensuring that the operation of the loading and unloading device is improved and that the cables have longer working lives. Naturally, the details of construction of the invention may be varied from those described and illustrated, without thereby departing from the scope of the claims which follow.

Thus, for example, the loading and unloading device could be made for use on the ground for transferring loads from suitably-equipped platforms.

## Claim

Device for loading and unloading vehicles, comprising a plurality of endless cables extending in parallel along a loading platform of a vehicle with respective conveyor passes projecting from the platform and return passes contained within the thickness of the platform, and in which the cables are driven by a transverse thrust element connected to the conveyor passes and driven by means of a chain-driven operating mechanism, characterized in that the conveyor passes (1a) of the cables (1) slide along guides (5) of self-lubricating plastics material of high strength fixed to the loading platform (P) of the vehicle (S) and having longitudinal slide grooves (7) of semi-circular section, in which the conveyor passes (1a) of the cables (1) rest, and in that the cables (1) are constituted by stranded cables with longitudinal external facetting.

## Patentanspruch

Vorrichtung zum Be- und Entladen von Fahrzeugen, mit mehreren Endlostrossen, die sich parallel zu einer Ladefläche des Fahrzeuges erstrecken, mit entsprechenden Transportführungen, die auf der Ladefläche hervorstehen, und Rückführungen, die in der Ladefläche verlaufen und in welchen die Trossen von einem seitlichen Schubelement angetrieben werden, das mit den Transportführungen verbunden ist und durch einen Kettenantrieb angetrieben wird, dadurch gekennzeichnet, daß die Transportführungen (1a) der Trossen (1) in Führungen (5) aus selbstschmierendem hochbelastbaren Kunststoffmaterial gleiten, die auf der Ladefläche (P) des Fahrzeuges (S) befestigt sind und längliche Leitkanäle (7) mit halbrundem Querschnitt aufweisen, in welchen die Transportführungen (1a) der Trossen (1) ruhen, und daß die Trossen (1) aus verseilten Kabeln mit auf der Oberfläche längsverlaufenden strängen bestehen.

## Revendication

Dispositif de chargement et de déchargement de véhicules, comprenant plusieurs câbles sans fin s'étendant en parallèle le long d'une plate-forme de chargement d'un véhicule avec des passages transporteurs respectifs dépassant de la plate-forme et des passages retours contenus à l'intérieur de l'épaisseur de la plate-forme, et dans lequel les câbles sont entraînés par un élément transversal de poussée connecté aux passages transporteurs et commandé au moyen d'un mécanisme à chaîne d'entraînenent, caractérisé en ce que les passages transporteurs (1a) des câbles (1) glissent le long de guides (5) en matériau plastique auto-lubrifié de haute résistance fixés à la plate-forme de chargement (P) du véhicule (S) et ayant des glissières longitudinales (7) de section semi-circulaire, dans lesquelles reposent les passages transporteurs (1a) des câbles (1), et en ce que les câbles (1) sont constitués de câbles à torons avec facettage externe longitudinal.

# FIG. 1

# FIG. 2

# FIG. 3